# EUROPEAN PATENT SPECIFICATION

(11) **EP 2 730 106 B1**
(45) Date of publication and mention of the grant of the patent: **24.08.2016**
(21) Application number: 11746622.7
(22) Date of filing: 07.07.2011
(51) Int. Cl.: H04W 64/00, G01S 5/02, H04W 4/02

(54) **SUPPORTING A POSITIONING OF AN APPARATUS THAT IS BASED ON PERIODIC TRANSMISSIONS OF THE APPARATUS**
UNTERSTÜTZUNG EINER POSITIONIERUNG EINER VORRICHTUNG AUF DER BASIS VON PERIODISCHEN ÜBERTRAGUNGEN DER VORRICHTUNG
SUPPORT D'UN POSITIONNEMENT D'UN APPAREIL QUI EST BASÉ SUR DES TRANSMISSIONS PÉRIODIQUES DE L'APPAREIL

(43) Date of publication of application: 14.05.2014
(73) Proprietor: Nokia Technologies Oy, 02610 Espoo (FI)
(72) Inventor: RUUTU, Jussi, FIN-02210 Espoo (FI); RANKI, Ville, FI-02360 Espoo (FI); KAINULAINEN, Antti, FI-02650 Espoo (FI); AHO, Eero, FI-33820 Tampere (FI); LUOMA, Juha Pekka, FI-33210 Tampere (FI); OKSANEN, Markku Anttoni, FI-00940 Helsinki (FI)
(74) Representative: Anderson, Oliver Ben
(86) International application number: PCT/IB2011/053034
(87) International publication number: WO 2013/005081

(56) References cited:
- WO-A1-2009/135191
- US-A1- 2007 139 199
- US-A1- 2008 043 715
- US-B1- 7 349 705

## Description

### FIELD OF THE DISCLOSURE

The invention relates to the field of positioning, and more specifically to a positioning of a mobile apparatus that is based on periodic transmissions of information by the mobile apparatus.

### BACKGROUND

Periodic transmissions of a mobile apparatus can be used to determine and track the position of a mobile apparatus in any area provided with a suitable infrastructure.

The mobile apparatus could be for instance a location tag that is to be used for asset tracking or a more complex device.

A positioning making use of periodic transmissions can be used for instance for achieving accurate positioning indoors; it may enable a resolution of down to 30 cm. It may be based for instance on low cost Bluetooth Low Energy (BT LE) technology, which is a feature of the Bluetooth 4.0 technology being standardized by the Bluetooth Special Interest Group (SIG).

A positioning system making use of periodic BT LE transmissions can be used with smart devices that locate themselves using a BT LE signal emitted by directional transceivers (DT). The directional transceivers are also referred to as beacons. Alternatively, a reversed mode of operation can be used. In this "asset tracking" mode, BT LE transceivers that are referred to as tags or location tags emit a signal that is picked up by directional transceivers. The signal is effectively a data packet that enables a directional transceiver to identify the tag and to calculate the direction vector from the directional transceiver towards the tag using a reception of the signal by multiple antennas of the directional transceiver. This process is also referred to as "tag update". An infrastructure behind the directional transceivers may calculate the position of the tag based on the direction vectors determined by several directional receivers, if the location of each directional transceiver is known. The infrastructure may comprise to this end a positioning server that contains data buffering and position calculation functions. Additionally, the infrastructure may contain various management and application servers.

Location tags supporting the second operating mode can be particularly small and inexpensive, and they may be attached to any desired moving object. A location tag may comprise for instance a battery, some logic in the form of a microcontroller and radio parts. It may be configured to periodically transmit a signal in order to enable determination of positions of the tag. The positions may be used, for instance, for tracking an object to which the tag is associated. Typical frequencies of transmissions and thus of enabled location updates are 1, 10 or 50 times per second.

While a positioning of a mobile apparatus by means of periodic transmissions of the mobile apparatus can be realized in a positioning system using BT LE, it is to be understood that a similar approach can be used with various other systems and transmission technologies, for instance with a positioning system using active radio frequency identification (RFID).

WO2009/135191 A1 discloses the transmission of data that will be used to determine the position of the terminal. The frequency of transmission is made dependent on the speed or battery level of the terminal. US 7 349 705 B1 discloses the modification of the transmission of the position depending on the speed of the terminal.

### SUMMARY OF SOME EMBODIMENTS OF THE INVENTION

The invention is defined by the claims.

A first embodiment of an apparatus according to the invention comprises one or more means for realizing the actions of the presented embodiment of the method according to the invention.

The means of this first embodiment of an apparatus can be implemented in hardware and/or software. They may comprise for instance a processor for executing computer program code for realizing the required functions, a memory storing the program code, or both. Alternatively, they could comprise for instance circuitry that is designed to realize the required functions, for example implemented in a chipset or a chip, like an integrated circuit.

A second embodiment of an apparatus according to the invention comprises at least one processor and at least one memory including computer program code, the at least one memory and the computer program code configured to, with the processor, cause an apparatus at least to perform the actions of the presented embodiment of the method according to the invention.

Moreover, an embodiment of a computer readable storage medium according to the invention is presented, in which computer program code is stored. The computer program code causes a device to perform the actions of the presented embodiment of the method according to the invention when executed by a processor.

The computer readable storage medium is a non-transient medium and could be for example a disk or a memory or the like. The computer program code could be stored in the computer readable storage medium in the form of instructions encoding the computer-readable storage medium. The computer readable storage medium may be intended for taking part in the operation of a device, like an internal or external hard disk of a computer, or be intended for distribution of the program code, like an optical disc or a memory stick.

It is to be understood that also the computer program code by itself has to be considered an embodiment of the invention.

An embodiment of a system according to the invention comprises a mobile apparatus and a positioning infrastructure. At least one of the mobile apparatus and a stationary apparatus of the positioning infrastructure is an embodiment of an apparatus according to the invention.

Any of the described apparatuses may comprise only the indicated components or one or more additional components. Furthermore, any of the described apparatuses may be a module or component for a device, or a fully functional device.

In one embodiment, the described method is an information providing method, and the described first apparatus is an information providing apparatus. In one embodiment, the means of the described first apparatus are processing means.

In certain embodiments of the described method, the method is a method for supporting a positioning of a mobile apparatus. In certain embodiments of the described apparatuses, the apparatuses are apparatuses for supporting a positioning of a mobile apparatus.

It is to be understood that any feature presented for a particular exemplary embodiment may also be used in combination with any other described exemplary embodiment of any category.

Further, it is to be understood that the presentation of the invention in this section is merely exemplary and non-limiting.

Other exemplary features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE FIGURES

- Fig. 1: is a schematic block diagram of an exemplary embodiment of an apparatus according to the invention;
- Fig. 2: is a flow chart illustrating an exemplary operation in the apparatus of Figure 1;
- Fig. 3: is a schematic block diagram of an exemplary embodiment of a system according to the invention; and
- Fig. 4: is a flow chart illustrating an exemplary operation in the system of Figure 3.

### DETAILED DESCRIPTION OF THE FIGURES

When a location tag, or a similar battery operated mobile apparatus, periodically transmits information in order to enable its positioning, the optimal frequency of the transmission may depend on various factors; some of the main factors are the needed location accuracy and the possible speed of the tag.

Location tags and similar apparatuses that are used for asset tracking are typically attached to some object for a long period of time. For such asset tracking, it is beneficial if the batteries powering the tags last long, preferably for years. The tags may be arranged in a place that does not allow easy replacement of the battery. Moreover, a replacement may involve a significant amount of manual work that does not pay with low cost tags. The tags may also be disposable and not enable an exchange of battery at all.

The main source of energy consumption at a tag results from the transmission of data packets by the tag for location updates. In between the updates, the energy consumption may be minimal, since the tag effectively sleeps. Thus, the frequency of tag updates is essentially inversely proportional to the battery life. Doubling the update frequency, for instance, could halve the battery's life. However, when reducing the update frequency, the accuracy in tracking the tag, and any associated object, is reduced. Especially if the tag is attached to an object that can move fast, a high update frequency may be needed.

Conventionally, the update frequency of the tag position and thus of the transmissions is manually set to a fixed value that is determined before installing the tag to the object that is tracked. In practice, the best update frequency is estimated under consideration of the relevant criteria, and a corresponding value is programmed to the tag before deployment.

Furthermore, problems may exist when there is too much radio traffic on the air interface. This may be the case, when several tags located close to each other are designed to enable a determination of their location with a high update frequency by frequent transmissions of data packets. Alternatively or in addition, other types of devices may be using the same radio spectrum, for instance wireless local area network (WLAN) devices or microwave ovens. In both cases, there may be a high amount of collisions of data packets. If collisions are handled by resending data packets, the energy consumption of the tags is increased due to the need of resending the data packets and the total data throughput is decreased due to a further increase in packet collisions.

Similar problems may arise with other types of devices, for instance with smart devices, which compute their own position and which transmit information on the computed position periodically to some infrastructure.

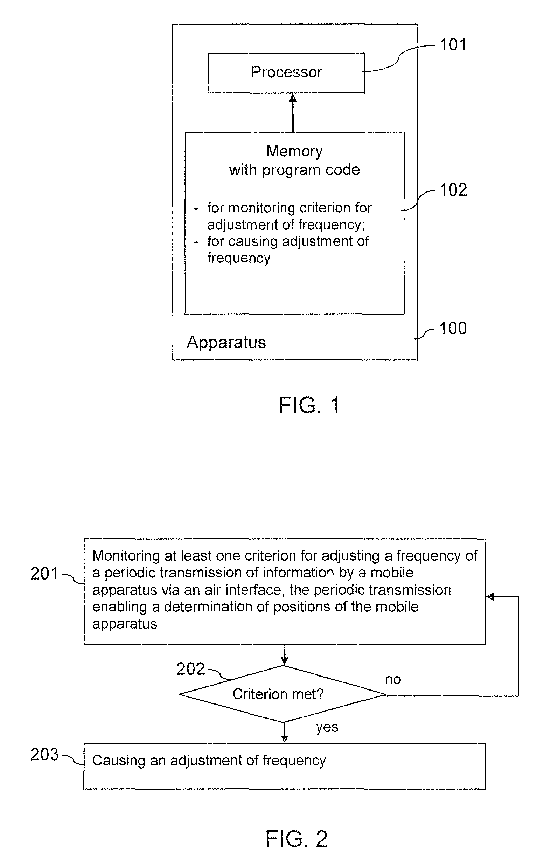

Figure 1 is a schematic block diagram of an exemplary embodiment of an apparatus according to the invention.

Apparatus 100 comprises a processor 101 and, linked to processor 101, a memory 102. Memory 102 stores computer program code, which is designed for monitoring at least one criterion and for causing an adjustment of a frequency of a periodical transmission of information if the at least one criterion is met. Processor 101 is configured to execute computer program code stored in memory 102 in order to cause a device to perform desired actions.

An operation of apparatus 100 will now be described with reference to the flow chart of Figure 2. The operation is an exemplary embodiment of a method according to the invention. Processor 101 and the program code stored in memory 102 cause a device to perform the operation when the program code is retrieved from memory 102 and executed by processor 101.

The device monitors at least one criterion for adjusting a frequency of a periodic transmission of bluetooth low energy data packets by a mobile apparatus via an air interface (action 201). The transmission of bluetooth low energy data packets enables a determination of positions of the mobile apparatus.

Whenever it is detected that the at least one criterion is met (action 202), the device causes an adjustment of the frequency (action 203).

The operation presented in Figure 2 thus supports a positioning of a mobile apparatus that is based on periodic transmissions of the mobile apparatus. It enables an adjustment of a repetition frequency at which information is transmitted based on monitored criteria. This may have the effect that the information is always transmitted at an optimal rate for a current situation as represented by the monitored criteria.

The adjustment of frequency may be an adjustment to any of at least two different frequencies greater than zero. The selectable frequencies may be predetermined or arbitrary.

The information may comprise information indentifying the mobile apparatus.

Apparatus 100 illustrated in Figure 1 and the operation illustrated in Figure 2 may be implemented and refined in various ways.

The apparatus of Figure 1 may correspond to the mobile apparatus or be a stationary apparatus, and the actions of the method of Figure 2 may be performed at the mobile apparatus and/or at a stationary apparatus. In the respective latter case, causing an adjustment of the frequency may comprise causing, by the stationary apparatus, a transmission of a re-configuration message to the mobile apparatus.

If the actions of the method of Figure 2 are performed at the mobile apparatus, this may have the advantage that information that is only available at the mobile apparatus can be taken into account without requiring a corresponding transmission of the information to a stationary apparatus. If the actions are performed at the mobile apparatus only, this may have the advantage that additional energy for listening to re-configuration messages on the air interface is not needed. It may further have the advantage that it is suitable for a mobile apparatus supporting transmissions only. In this case, the apparatus does not necessarily have to comprise a receiver. If the actions are performed at a stationary apparatus, this may have the advantage that information that is not available at the mobile apparatus may be taken into account, including information on other mobile apparatuses. Furthermore, the processing load at the mobile apparatus may be reduced, if some criterion is monitored at a stationary apparatus.

If the actions of the method of Figure 2 are performed at the mobile apparatus, the at least one criterion monitored by the mobile apparatus may relate for instance to a receipt of a re-configuration message from a stationary apparatus. The at least one criterion monitored by the mobile apparatus may further relate to sensor data. Such sensor data could comprise an indication of ambient temperature, an indication of a movement of the mobile apparatus, an indication of an amount of ambient light, an indication of an applied physical force to the mobile device and/or other sensor data. It could be provided that a higher frequency is used when a light sensor lights detects that lights are turned on, when a movement detector detects that the apparatus is moving, or when a temperature sensor indicates that the mobile apparatus is held in a person's hand. The at least one criterion monitored by the mobile apparatus may further relate to an indication of a position of the mobile apparatus. It could be provided that different frequencies are used at different positions. The mobile apparatus may receive the indication of its location from a positioning server via some connection, e.g. an Internet connection, or it may compute its location by itself. The at least one criterion monitored by the mobile apparatus may further relate to an indication of remaining battery energy available to the mobile apparatus. In the case of little remaining battery energy, the frequency of transmissions could be reduced in order to extend the remaining life span of the battery and possibly of the mobile apparatus as a whole. The at least one criterion monitored by a mobile apparatus may further relate to a current time of day and/or a current date. For instance, the position of the mobile apparatus may only be relevant at certain times of day, and the frequency may be reduced significantly at other times. The at least one criterion monitored by the mobile apparatus may further relate to a current time of day and/or a current date. For instance, the position of the mobile apparatus may only be relevant during week days, not on Sundays or public holidays, and the frequency may be reduced significantly at other times. The at least one criterion monitored by the mobile apparatus may further relate to an amount of traffic on the air interface. The at least one criterion monitored by the mobile apparatus may further relate to an amount of detected packet collisions on the air interface. In case there is a high amount of traffic or a high amount of detected packet collisions, the frequency of transmissions may be decreased to reduce the amount of collisions.

The at least one criterion monitored by the mobile apparatus may also be any combination of a plurality of criteria, which may or may not include one or more of the criteria mentioned above.

The mobile apparatus may monitor the at least one criterion only in predetermined time intervals and/or for a predetermined period after each transmission of information. This may have the effect that the additional battery energy required for the monitoring is limited.

If the actions of the method of Figure 2 are performed at least at a stationary apparatus, the at least one criterion monitored by the stationary apparatus may relate to a position or a movement of the mobile apparatus. In certain predetermined areas, a particularly high or low accuracy of positioning may be desired, and the frequency of transmission may be adjusted correspondingly; or it may be desired to adjust the frequency to the speed of the mobile apparatus to obtain a constant accuracy. The criterion monitored by the stationary apparatus may further relate to a current time of the day and/or a current date. A high accuracy of positioning might only be desired at certain times, as mentioned with reference to the criteria that may be monitored by a mobile apparatus. At other times the frequency of transmissions may thus be reduced. The at least one criterion monitored by the stationary apparatus may further relate to information received, at the stationary apparatus, from the mobile apparatus. Such information could include for instance a current battery status of the mobile apparatus. If such information is evaluated at the stationary apparatus, processing load at the mobile apparatus may be reduced. The at least one criterion monitored by the stationary apparatus may further relate to a quality of received signals, to a number of mobile apparatuses transmitting information, to an amount of traffic on the air interface, and/or to an amount of detected packet collisions. If there is a large number of apparatuses and/or a high amount of traffic and/or a large number of detected packet collisions, it may be of advantage to reduce the frequency of transmissions in order to enable a reliable positioning at least with a lower accuracy and/or in order to reduce the processing load at the stationary apparatus.

It may be noted in general that if a monitored criterion relates to a particular parameter, the actual criterion could be for instance the current value of the parameter exceeding or falling short of a predetermined threshold value or lying within a predetermined range of values. If a criterion relates to a received re-configuration message, the criterion might be for instance receipt of an indication of a new frequency in the message.

As becomes apparent from the above examples, a re-configuration message may be used in various embodiments. In any case, a re-configuration message transmitted from a stationary apparatus to the mobile apparatus may indicate a desired frequency for the periodic transmission of information, for instance 1 Hz, 10 Hz or 50 Hz, etc. Alternatively, it may define a range of frequencies for the periodic transmission of information. The mobile apparatus may then select a frequency within this range based on an additional criterion, like the current battery status. Similarly, the re-configuration message may indicate a desired time interval between periodic transmissions of information, for instance 100 ms. Alternatively, it may define a desired range of time intervals between the periodic transmissions, for instance 100 ms to 200 ms.

Instead of an absolute value for frequency or time interval, the re-configuration message could also indicate a desired amount of change of a frequency that is currently used for a periodic transmission of information. It could indicate for instance that the currently used frequency is to be increased by 25% or that the currently used frequency is to be increased by +5Hz. This may have the advantage that a stationary apparatus does not have to track the current frequency used by all mobile apparatuses. In addition, it may have the advantage that the frequencies of periodic transmissions by a plurality of mobile apparatuses may be caused to be adjusted by means of a single re-configuration message, while existing differences between these frequencies can be maintained.

Alternatively, the re-configuration message could provide an indication of a further criterion for adjusting the frequency of the periodic transmission of information. Such a criterion could be a target battery life for the mobile apparatus. The re-configuration message could also include any other kind of information or instructions. It could indicate for instance a time span for which an adjustment of frequency is to be applied. It could also be a set of logical instructions and parameters enabling the mobile device to determine the actual frequency of the periodic transmissions of information.

A re-configuration message could be provided by a stationary apparatus for transmission to an individual mobile apparatus, to a specified set of mobile apparatuses or to all suitable mobile apparatuses in the coverage area of a positioning infrastructure to which the stationary apparatus belongs.

Certain embodiments may provide that the mobile apparatus transmits a confirmation of adjustment of frequency, a report of failure of an adjustment of frequency, an indication of an adjusted frequency value, an energy status of a battery of the mobile apparatus, and/or an indication of a status of motion of the mobile apparatus. The status of motion could be determined for instance by a motion detector associated to the mobile apparatus. The status of motion may be simply "stationary" versus "moving", or more comprehensive information.

The apparatus 100 of Figure 1 could be for instance a chip, a circuitry, an integrated circuit, a printed circuit board, a plug-in module, a tag, a mobile device or a stationary device, or any other kind of device implementing the indicated features.

If the apparatus 100 is a tag or a mobile device comprising such a tag or a module for use in such a tag, the tag could be for example a location tag using Bluetooth. If the apparatus 100 is a stationary device or a module for use in a stationary device, the stationary device could be for instance a positioning server, a management server or an application server of a positioning infrastructure. The positioning infrastructure could be a Bluetooth based infrastructure. It can further be for instance, though not exclusively, an indoor positioning infrastructure.

As mentioned above, an asset tracking systems can make use of BT LE technology. BT LE supports a bi-directional data exchange. BT LE based systems may use a broadcast channel for their asset tracking mode. Such a broadcast channel could also be used for causing a reconfiguration of tags when the same reconfiguration message is to be sent to several or all tags in the coverage area. However, there are also some dedicated channels available with BT LE. These dedicated channels may be used for communicating a re-configuration message to a particular tag or to a limited group of tags and/or for obtaining status information from a tag.

In an exemplary embodiment, apparatus 100 could comprise one or more additional components. It could comprise a battery. It could further comprise a sensor like a temperature sensor, a light sensor or a movement sensor, etc. It could comprise a time monitor, that is, a component configured to monitor time and/or date. It could comprise a circuitry configured to detect a battery status of a battery providing a power supply to the mobile apparatus and/or a circuitry configured to detect a status of the air interface. It could comprise a user interface. If apparatus 100 is or belongs to the mobile apparatus periodically transmitting information, it could comprise in addition a transmitter configured to transmit information via the air interface or a transceiver configured to enable an exchange of data via the air interface. If apparatus 100 is or belongs to a stationary apparatus, it could comprise in addition for instance a transceiver configured to enable an exchange of data either directly with a mobile apparatus or indirectly via some other stationary apparatus, like a directional transceiver or some other kind of beacon or base station.

Exemplary use cases for embodiments of the invention include a tracking of shopping carts in supermarkets. Such a tracking may provide valuable business information about how consumers move in the shop, how long they queue, etc. Alternatively, embodiments of the invention could be used by security organizations for locating their personnel in premises, such as airports or shopping malls, in order to be able to respond quickly to incidents.

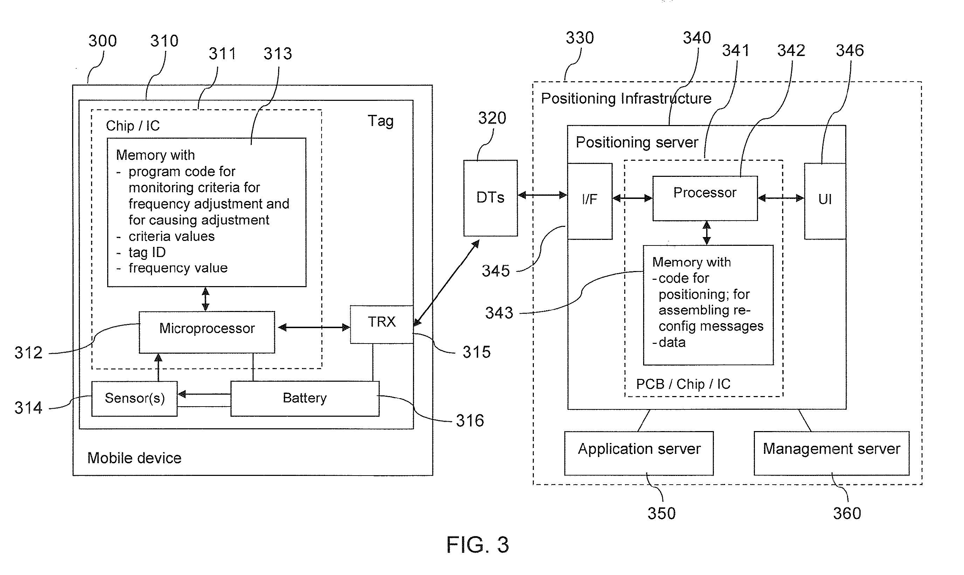

Figure 3 is a schematic block diagram presenting an exemplary embodiment of a system according to the invention.

The system comprises a mobile device 300, a plurality of directional transceivers 320 and, linked to the directional transceivers 320, a positioning infrastructure 330. The positioning infrastructure 330 includes a positioning server 340 and, linked to positioning server 340, an application server 350 and a management server 360.

By way of example, mobile device 300 is assumed to be a shopping cart. Alternatively, it could be a wristband for security personnel or any other mobile device that is to be tracked. Mobile device 300 comprises a location tag 310. Tag 310 could be for instance a location tag including a processor 312 and a memory 313 storing program code for execution by processor 312. Memory 313 may store in addition an identity (ID) of tag 310, a group identity of tag 310, fixed or adjustable values to be monitored for adjusting a transmission frequency, and an adjustable value indicating the frequency that is currently to be used for a periodic transmission, as well as various other data. The program code may comprise code for causing a periodic transmission of a data packet including at least the identity of the tag, using a rate that corresponds to the frequency value stored in memory 313. The program code may comprise in addition code for monitoring a criterion for adjusting the frequency and for causing an adjustment of the frequency, for example by changing the stored frequency value. Tag 310 may further comprise a battery 316 that is connected to all components of tag 310 requiring a power supply. Tag 310 may further comprise one or more sensors 314. Such sensors 314 may include for instance an accelerometer, a light sensor, a temperature sensor, a sensor for sensing the battery state and/or a sensor for sensing the situation on the air interface. Tag 310 may further comprise a transceiver (TRX) 315 configured to transmit and receive information via the air interface. Transceiver 315 is a BT LE transceiver. Tag 310 could also have more than one transceiver 315 and those transceivers could also be of different technologies. Further on, it is possible that the actual positioning occurs via a BT LE transceiver but a communication to adjust the frequency of the periodic transmissions of information occurs via another transceiver (e.g. a WLAN transceiver). Processor 312 could be a microprocessor. It is linked to memory 313, to sensors 314 and to transceiver 315. Some or all of the components of tag 310, for instance at least processor 312 and memory 313, may be integrated on a chip or in an integrated circuit 311, for example to form a microcontroller.

Each directional transceiver 320 comprises multiple antennas configured to receive data packets from tags. Each directional transceiver 320 may further be configured to identify a tag which transmitted a data packet from an identity included in the data packet and to calculate the direction vector from directional transceiver 320 towards the tag using its multiple antennas. Directional transceivers 320 are configured to forward identity, direction and optionally other information included in a received data packet to positioning server 340. Directional transceivers 320 may be configured to determine direction vectors only for data packets received on predetermined channels. Information that is received from tags on other channels may be forwarded without processing to positioning server 340. Directional transceivers 320 are further configured to transmit messages received from the positioning infrastructure 330 to one or more tags.

Positioning server 340 comprises a processor 342 and a memory 343 storing program code for execution by processor 342. Memory 343 may store in addition other data, for instance tracks of various tags. It may also be used for buffering data received from directional transceivers 320. The program code may comprise code for determining the position of a tag based on information received from directional transceivers 320. The program code may further comprise code for monitoring criteria for adjusting a frequency of a period transmission of a tag or a group of tags and for causing an adjustment of the frequency at one or more tags. Processor 342 and memory 343 may be implemented in a chip, circuitry, printed circuit board (PCB), plug-in module or any other module 341. Positioning server 340 may comprise in addition an interface (I/F) 345 configured to receive information from directional transceivers 320 and to transmit information to tags 310 via directional transceivers 320. Positioning server 340 may comprise in addition a user interface (UI) 346 configured to enable a user to control the operation of positioning server 340. Processor 342 is linked to memory 343, interface 345 and user interface 346.

Application server 350 may be configured to receive from positioning server 340 identity information, position information and an accuracy indication for various tags, and to use this information as input to some application, for instance to an application evaluating how customers move through a shop.

Management server 360 may provide management functionality for the system. It is to be understood that the handling of the frequency adjustment could also be implemented for example in management server 360 instead of positioning server 340.

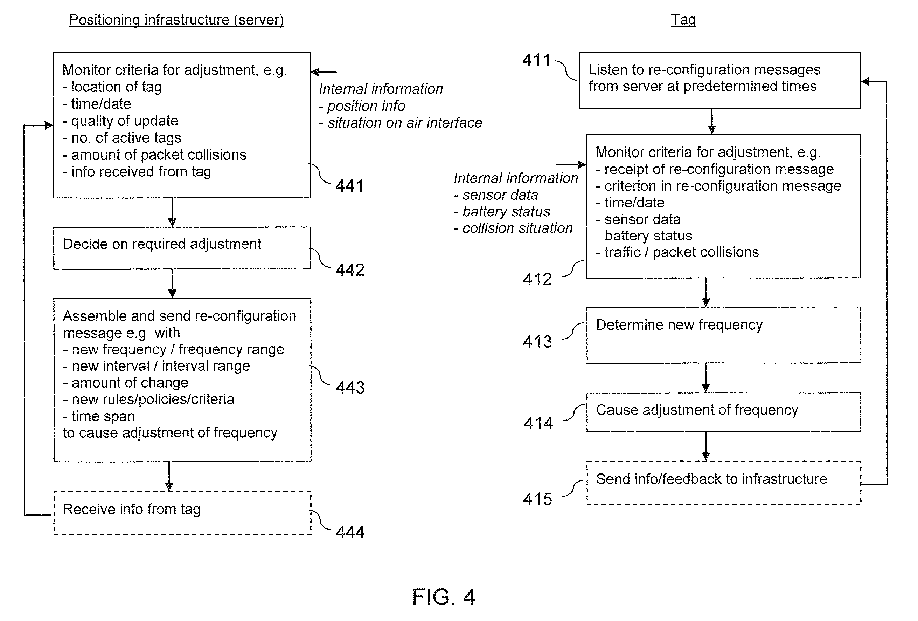

An exemplary operation in system of Figure 3 will now be described with reference to the flow chart of Figure 4. Tag 310 is caused by processor 312 to perform the actions presented on the right hand side of Figure 4 when executing program code that is stored in memory 313. Server 340 is caused by processor 342 to perform the actions presented on the left hand side of Figure 4 when executing program code that is stored in memory 343.

Tag 310 periodically transmits data packets including at least the identity of tag 310. Directional transceivers 320 receive the data packets, extract the identity and any other information, calculate the direction vector of the respective transceiver 320 towards tag 310, and provide an indication of the identity of tag 310, of the direction vector and of the accuracy of the vector to server 340. Server 340 determines the position of tag 310 from the information received from one or several directional transceivers 320. (actions not shown in Figure 4)

Server 340 moreover monitors at least one criterion that may call for an adjustment of the current frequency of the periodic transmission of tag 310 (action 441). Based on the monitoring, server 340 decides whether an adjustment may be required (action 442). If an adjustment may be required, server 340 assembles a re-configuration message and sends it to tag 310 in order to cause an adjustment of the frequency (action 443). Optionally, server 340 may receive feedback information from tag 310, including e.g. information on a current battery status or other information (action 444). This information may be considered as well in the monitoring of at least one criterion in action 441.

Tag 310 monitors as well at least one criterion that may call for an adjustment of the current frequency used for periodically transmitting data packets (action 412). The criterion may relate only to data that is obtained at tag 310, for example from sensors 314. Alternatively or in addition, it may relate to re-configuration messages received from server 340 (action 411). If the at least one criterion is met, tag 310 determines a new frequency (action 413) and causes an adjustment of the frequency (action 414), for instance by setting a corresponding value in memory 313. Optionally, tag 310 may send a feedback on the adjustment and/or some sensor data to server 340 (action 415).

Exemplary details of the operation will be presented in the following.

### Update strategy

At first, an update strategy has to be determined that is suited to achieve one or more aims, in order to implement tag 310 and server 340 accordingly.

It may be an aim to optimize the battery life of tag 310. There may be some target for energy, for instance that battery 316 of the tag 310 should last for one year. In addition, there may be some target for accuracy, for instance that a shopping cart should be tracked with the accuracy of 5 meters. For optimizing the battery life, these targets must be combined using some strategy that depends on the particular use case. For example, a shopkeeper may only be interested in knowing how many customers are waiting in the queue for cashier desks, while an airport security may generally need a very accurate location of its security personnel. In the former case the energy is an issue since changing the battery for a big number of tags in shopping carts may be laborious, while in the latter case the personnel may easily replace or recharge the battery of the tag. It may be another aim to reduce the processing load at the positioning infrastructure and/or to improve the quality of received data packets.

Some criteria that may be considered when determining the tag update strategy for achieving respective aims include the following:
For certain embodiments, it may of advantage to adjust the frequency of the tag update depending on the location tag 310. Some areas may be considered as "parking areas" where the tag's update frequency can be minimal. For example, if tag 310 is attached to a shopping cart 300, then the storage area for shopping carts may be considered as a low frequency area, in which a frequency of transmission may be limited for instance to 0.5 Hz. When a cart moves out of this area, then the frequency may be changed for instance to 10 Hz. It is also possible that some areas are considered as high update frequency areas. For example, a directional transceiver 320 may be placed above the entrance of a shop and when reaching this area, tag 310 may be configured to transmit data packets with a higher frequency for a certain period of time.

For certain embodiments, it may be of advantage to adjust the frequency depending on time and date. For example, when the shop is closed, tag 310 may be re-configured to drop its update frequency.

For certain embodiments, it may be of advantage to adjust the frequency of transmission depending on internal parameters of tag 310, such as sensor data. For example, tag 310 may be able to measure its remaining battery energy and report this to positioning infrastructure 330. The frequency of the periodic transmission may then be caused to be adjusted according to the current battery status. For instance, a tag with low energy may never transmit update data packets with more than 5 Hz. Alternatively, data about the movement of tag 310 may be used as a criterion for adjusting the frequency. For example, when no movement is detected, the frequency may be set to 0.01 Hz, while during movement it may be set to 10 Hz. It should be noted that acceleration, speed and/or movement can be detected either using a local sensor 314 of tag 310, or tracked positions of tag 310 determined by the positioning infrastructure 330, or both. Alternatively or in addition to a movement of tag 310, the speed of tag 310 may be a criterion as well. In this case, positioning infrastructure 330 may calculate the speed or velocity of tag 310 based on determined and tracked positions and cause a corresponding adjustment of the frequency of the periodic transmissions. For example, a slowly moving shopping cart 300 could be tracked with 1 Hz, but a fast one could be tracked with 10 Hz. Positioning infrastructure 330 may also have some target accuracy for the asset tracking and calculate the minimum frequency of the periodic transmissions of tag 310 to achieve this accuracy.

For certain embodiments, it may be of advantage to adjust the frequency of the periodic transmissions depending on the quality of the location update. Effectively, the quality of tag location updates may change heavily. Some updates may be good or poor, depending on radio interferences on the air interface between tag 310 and directional transceivers 320, the distance of tag 310 from directional transceivers 320, etc. If tag 310 has poor quality continuously, then the frequency of periodic transmissions by tag 310 may be caused to be dropped in order to avoid a waste of battery 316, or increased in order to try obtaining at least a few good updates.

For certain embodiments, it may be of advantage to adjust the frequency of periodic transmissions of tag 310 depending on available tracking information for other tags. For example, during busy hours, a shop may have sufficient tags moving around to provide enough information about customer flows. In this case some tags may be re-configured to drop their update frequency, since their information is not needed.

For certain embodiments, it may be of advantage to adjust the frequency of period transmissions depending on the number of active tags. There is a limit to the bandwidth of the BT LE air interface that can be exceeded by too many active devices in the used radio spectrum, including for example location tags, WLAN devices and microwave ovens. Tag 310 may be configured to change its frequency of periodic transmissions triggered by a re-configuration message from positioning infrastructure 330, or by observing that the combined frequency of update data packets sent by tags in radio range has exceeded a predetermined limit in the update strategy. Concentration of too many tags in the coverage area of a single directional transceiver 320 can occur especially in an area that is covered by multiple directional transceivers 320.

For certain embodiments, it may be of advantage to adjust the frequency of periodic transmissions depending on the amount of packet collisions on the air interface. Positioning infrastructure 330 may monitor the packet collisions. When there are too many collisions in some area, the update frequencies of all tags in this area could be caused to be decreased e.g. by 20%. Alternatively, tag 310 itself may be configured to monitor the amount of packet collisions and decrease the update frequency on its own whenever too many collisions are detected.

For certain embodiments, it may be of advantage to distinguish the tags that are caused to adjust their frequency of periodic transmissions, in particular if the positioning system is large. In this case, is it possible to utilize an approach in which the tags and the infrastructure share some kind of a "system key". Directional transceivers 320 may share the same "system key", and the positioning infrastructure 330 could then be capable of causing an adjustment of the frequencies of periodic transmissions by the tags, without a pairing and a forming of actual connections between tags and directional transceivers being required.

Finally, it should be noted that the processing that is required for causing an adjustment of the frequency of periodic transmissions consumes extra energy in tag 320. In particular, listening to re-configuration messages on the air interface, and possibly transmitting some extra message related to a frequency adjustment, increases the energy consumption at tag 320. In addition, the processing of received re-configuration messages adds overhead at tag 320. Thus, a re-configuration message based update strategy may also address how often the tag should listen to re-configuration messages and how often the frequency should be adjusted.

The eventually selected update strategy may be based on a combination of the approaches listed above. The final update strategy includes for instance a specification which criteria are monitored by which entity, what is the desired effect on the frequency of periodic transmissions or on a follow-up criterion when it is detected that a criterion is met, and which tags are to receive a respective re-configuration message by infrastructure 330, if any.

### Positioning infrastructure

Once the update strategy has been defined and positioning infrastructure 330 is to be involved in the strategy, positioning infrastructure 330 may be implemented accordingly. Positioning infrastructure 330 may have some existing element that can be used as well for re-configuring the frequency of a periodic transmission by the tags. Such an element could be for example positioning server 340 that computes the respective coordinates of the tags based on the information received from directional transceivers 320, as in the embodiment of Figure 3. There may also be a dedicated management server 360 that is used for maintaining the positioning system, which could be used as well for causing an adjustment of the frequencies of periodic transmissions by the tags. Furthermore, the re-configuration strategy may be defined manually or automatically in positioning infrastructure 330.

When the update strategy has been implemented, positioning infrastructure 330 monitors criteria based on the selected update strategy. Once the criteria required for this strategy (e.g. time and/or location) are fulfilled, a decision about a re-configuration is made. A re-configuration message is then sent via one or more directional transceivers to one or more tags.

If all available directional transceivers 320 try to send a re-configuration message at the same time, this might result in collisions on the air interface. Infrastructure 330 may therefore select a single directional transceiver for sending the commands to the tags. Infrastructure 330 could select for instance the directional transceiver closest to a tag for forwarding the re-configuration message to this tag.

A re-configuration message may cause an adjustment of frequency in various ways.

The re-configuration message could be a simple command that contains the absolute frequency (e.g. in Hz) or the time interval between the periodic transmissions (e.g. 100 ms).

Alternatively, the re-configuration message could cause an adjustment of frequency by means of some other parameters, for example a target battery lifetime (e.g. six month operating time). The tags may then be responsible for calculating a suitable absolute frequency for the periodic transmissions based on the current battery status.

Alternatively, the re-configuration message could comprise an update command that indicates only a desired change of frequency, e.g. a reduction of frequency by 25% or an increase of frequency by +5 Hz.

Alternatively, the re-configuration message could provide some policies or rules for adjusting the frequency used by the tags for periodic transmissions. For example, the re-configuration message may provide some range of update frequency (e.g. 5-10 Hz), and then the tags can determine the exact update frequency based on some local parameters.

A command conveyed in a re-configuration could also be indicated to be of temporary validity. In this case, the tag is instructed to use a new frequency for some period of time only. For example, the tag could be asked to use a high update frequency during the next 60 seconds before returning back to a normal update frequency.

Finally, the positioning infrastructure may optionally receive some feedback from the tag, for instance in the form of an indication whether or not the re-configuration was successful, an indication of the tag's new update frequency, or an indication of the energy status.

### Tag

Once the update strategy has been defined, also tag 310 may be implemented accordingly.

If the update strategy provides for re-configuration messages, tag 310 is configured to listen to re-configuration messages. There are various options for limiting the additional energy that is spent in waiting for re-configuration messages. For example, tag 310 could listen to the reconfiguration messages only at some pre-defined periods, for instance once in 10 seconds. Tag 310 is further configured to determine a new transmission frequency once it receives a re-configuration message.

Depending on the update strategy, tag 310 may also be configured to monitor internal parameters, such as sensor data, battery energy etc., as well as to monitor other types of parameters like air interface traffic. It is to be understood that means for determining the battery status and/or means for determining the situation on the radio interface may also be considered to be some kind of sensors.

If tag 310 is to monitor the battery status, the tag could comprise hardware configured to estimate the available energy in the battery 316 as an exemplary sensor 314. This may be accomplished with various approaches known in the art of energy and power management. For example, an analog-to-digital (AD) converter could be used for measuring the battery voltage and a circuitry could be provided for calculating the remaining battery energy. Alternatively, it would be possible to use simple comparators providing discrete estimations (e.g. above 60%, above 30%, above 5% of the original battery energy) as an exemplary sensor 314. Then, tag 310 may comprise rules handling the information provided by the hardware. Such a rule might be for instance: "If the remaining battery energy is below 30%, drop frequency to 1Hz, otherwise use 10 Hz", or similar. The battery status could also be reported to positioning infrastructure 330 in the transmitted packets, for instance on a regular basis or whenever some threshold value is reached.

If the update strategy provides that movement is a criterion to be considered by tag 310, tag 310 is configured to adjust the frequency based on a detected movement, for example an acceleration value provided by an accelerometer as an exemplary sensor 314. For example, tag 310 may pause the periodic transmission until movement is detected, or the frequency of the period transmission may be very small until movement is detected. Tag 310 could also be configured to evaluate provided movement data based on some more sophisticated algorithms. For example, it could be checked, if a movement shown by accelerometers is a movement that would be seen by positioning infrastructure 330. For instance, a human being may swing himself or may swing his arm. This produces accelerometer activations, but this might not be detected as an actual movement by positioning infrastructure 330. Therefore, such kind of movement might be filtered by tag 310 and not be considered as a movement that should result in a higher frequency of the periodic transmission. Tag 310 could also inform positioning infrastructure 330 about the detected motion, for instance in the periodically transmitted packets. For example, tag 310 could reduce the transmission frequency and inform positioning infrastructure 330 that it is not moving. The information could be limited to one bit in the positioning packets; the bit could have for instance a value of "0" for indicating that tag 310 is stationary and a value of "1" for indicating that tag 310 is moving. When tag 310 is stationary, positioning infrastructure 330 could receive the packets from tag 310 with low frequency and be sure that tag 310 is still alive and existing (e.g. not stolen). At the same time, positioning infrastructure 330 could reduce the computations as it does not need to update the location of a stationary tag.

Location tags may monitor the radio interface traffic, or at least packet collisions, as a function of a normal data transmission with BT LE anyhow. If the update strategy provides that tag 310 takes account of radio interface traffic, tag 310 may be configured to utilize this information to detect when there is too much radio traffic and to cause a decrease in the frequency of the periodic transmissions if this criterion is met. As a variation, packet collisions may be monitored to solve the same issue.

In some deployments it may be desirable that the transmission frequency of positioning tags depends more on the amount of radio traffic generated by other tags than on radio interference or transmissions by devices other than tags. For example, the update frequency of tags placed on valuables at a department should be within limits set in the update strategy and not overload the positioning system, but should be little affected by radio traffic from mobile devices of customers at the department store.

In other deployments indoor positioning may be of lower priority than use of the BT LE radio spectrum for other purposes. For example, the use of wireless devices by airport passengers could be prioritized over the use of bandwidth by a positioning system tracking luggage trolleys. Thus when determining adjustments to update frequency based on radio traffic monitoring, tag update strategy may distinguish between two or more types of bandwidth usage; for example, transmissions by location tags can be identified as such based on known bit patterns at the headers of BT LE packets generated by the tags.

Tag specific sensor data is most naturally processed in tag 310. However, in some cases it may be beneficial to process the sensor data in positioning infrastructure 330 and to send re-configuration commands to tag 310 that take account of this data. This may enable for instance a coordinated configuration of several tags by positioning infrastructure 330. For example, the battery voltage may be sent (very seldom) by tag 310 to positioning infrastructure 330. Positioning infrastructure 330 may then perform an energy estimation and return a new frequency for the periodic transmissions to tag 310.

Tag 310 may be configured to cause an adjustment of the frequency for example by replacing a parameter in a memory 313 of tag 310 provided to this end.

If the update strategy provides that infrastructure 330 makes use of feedback from tag 310 for generating re-configuration messages, tag 310 may send some information to positioning infrastructure 330. This may involve acknowledgement of the frequency update, report of failure, an energy status or simply the new frequency value. Such information may be sent as a part of the periodic transmissions or using some specially opened communication channel.

The embodiment presented with reference to Figures 3 and 4 provides that a positioning server 340 computes the position of mobile device 300; that is, the information periodically transmitted by the mobile device 300 is information excluding position information. It could comprise for instance exclusively an identification of tag 310, and optionally some feedback or sensor information as described above. It is to be understood that in other embodiments, mobile device 300 could be or comprise a smart device 310 that is configured to compute its own position based on signals transmitted by one or more directional transmitters 320. In such an embodiment, additional program code for computing the position could be stored in memory 313 for extraction and execution by processor 312. The computed position could then be transmitted periodically to infrastructure 330. In this case, the positioning infrastructure 330 is enabled to determine the position of device 310 by extracting the position information from signals received from device 310 and possibly by performing some format conversion or by mapping provided position details to the area definition of the area in which the positioning is performed. The determined position may then be used by the positioning infrastructure for tracking and/or evaluation.

Certain embodiments of the invention have the advantage that the energy consumption of a mobile apparatus is optimized, since a high rate of transmissions only has to be used when actually required and/or when of advantage. That is, certain embodiments allow reducing the energy consumption at a battery operated mobile apparatus and thus extending the battery life of the apparatus, while ensuring at the same time a satisfactory accuracy in the positioning of the mobile apparatus. Certain embodiments may also have the effect that a desired remaining lifetime of a battery is ensured, even if this means a certain compromise with respect to accuracy. In certain embodiments, the invention may have the effect that the power consumption of a battery operated mobile apparatus, like a location tag, is optimized such that the battery lifetime exceeds the expected lifespan of a tag in a typical asset tracking use case. In other embodiments, the invention may have the effect that the battery has to be exchanged at large intervals only.

In addition, certain embodiments allow reducing network and processing load in the infrastructure. Certain embodiments of the invention may further have the advantage that they allow handling a large number of mobile apparatuses in the same area by reducing the congestion of transmission channels on the air interface. Certain embodiments of the invention may further have the advantage that they allow adjusting the amount of transmissions to an available radio interface bandwidth, for example if other radio devices use the same radio spectrum as well.

Some of the energy saving benefits can even be achieved in systems implementing the method in a mobile apparatus only.

Figures 2 and 4 may also be understood to represent exemplary functional blocks of computer program codes for supporting a positioning of a mobile apparatus.

The processors used in any of the above described embodiments could also be used for various additional operations.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (i) to a combination of processor(s) or (ii) to portions of processor(s)/ software (including digital signal processor(s)), software, and memory(ies) that work together to cause an apparatus, such as a tag or server, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or portion of a processor and its (or their) accompanying software and/or firmware. The term 'circuitry' also covers, for example, a baseband integrated circuit or applications processor integrated circuit for a device.

Any of the processors mentioned in this text could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Any of the memories mentioned in this text could be implemented as a single memory or as a combination of a plurality of distinct memories, and may comprise for example a read-only memory, a random access memory, a flash memory or a hard disc drive memory etc.

Moreover, any of the actions described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The functions illustrated by processor 101 in combination with memory 102, processor 312 in combination with memory 313, processor 342 in combination with memory 343, or circuitry 311 or 314 can be viewed as means for monitoring at least one criterion for an adjustment of a frequency of a periodic transmission of information by a mobile apparatus via an air interface, the periodic transmission enabling a determination of positions of the mobile apparatus; and as means for causing an adjustment of the frequency, when it is detected that the at least one criterion is met.

The program codes in memory 102 or memory 313 or memory 343 can also be viewed as comprising such means in the form of functional modules.

It will be understood that all presented embodiments are only exemplary, that features of these embodiments may be omitted or replaced and that other features may be added. Any mentioned element and any mentioned method step can be used in any combination with all other mentioned elements and all other mentioned method step, respectively. It is the intention, therefore, to be limited only as indicated by the scope of the claims appended hereto.

## Claims

1. A method comprising:
monitoring at least one criterion for an adjustment of a frequency of a periodic transmission of bluetooth low energy data packets by a mobile apparatus via an air interface, the periodic transmission of bluetooth low energy data packets enabling a determination of a direction vector to or from the mobile apparatus; and
when it is detected that the at least one criterion is met, causing an adjustment of the frequency of periodic transmission of bluetooth low energy data packets by the mobile apparatus,
wherein the at least one criterion relates to at least one of:
ambient temperature at the mobile apparatus;
an amount of ambient light at the mobile apparatus;
a physical force applied to the mobile apparatus;
a current time of day;
a current date;
a quality of received transmissions;
an amount of mobile apparatuses transmitting information;
an amount of traffic on the air interface; and
an amount of detected packet collisions on the air interface.

2. The method according to claim 1, wherein the monitoring is performed at least by the mobile apparatus.

3. The method according to claim 2, wherein the criterion further relates to:
a movement of the mobile apparatus.

4. The method according to claim 2, wherein the criterion further relates to at least one of:
receipt, by the mobile apparatus, of a re-configuration message from a stationary apparatus;
sensor data;
a position of the mobile apparatus;
remaining battery energy available to the mobile apparatus.

5. The method according to any of claims 2 to 4, wherein the mobile apparatus monitors the at least one criterion only:
in predetermined time intervals; or
for a predetermined period after each transmission of information.

6. The method according to claim 1, wherein the monitoring is performed at least in part at a stationary apparatus, and wherein causing an adjustment of the frequency comprises causing, by the stationary apparatus, a transmission of a re-configuration message to the mobile apparatus.

7. The method according to claim 6, wherein the criterion monitored by the stationary apparatus further relates to:
a movement of the mobile apparatus.

8. The method according to claim 6, wherein the criterion monitored by the stationary apparatus further relates to at least one of:
a position of the mobile apparatus;
information received, at the stationary apparatus, from the mobile apparatus; a current battery status of the mobile apparatus.

9. The method according to any one of the preceding claims, wherein the monitoring is performed at least at the mobile apparatus and the criterion includes at least receiving, by the mobile apparatus, a re-configuration message from a stationary apparatus, or the monitoring is performed at least at a stationary apparatus and causing an adjustment of the frequency comprises transmitting, by the stationary apparatus, a re-configuration message to the mobile apparatus, and wherein the re-configuration message indicates at least one of:
a desired frequency for the periodic transmission of information;
a desired range of frequency for the periodic transmission of information;
a desired time interval between periodic transmissions of information;
a desired range of time intervals between periodic transmissions of information;
a desired amount of change of a frequency currently used for a periodic transmission of information;
an indication of a further criterion for adjusting the frequency of the periodic transmission of information;
a target battery life for the mobile apparatus; and
a time span during which an adjustment of frequency is to be applied.

10. The method according to one of the preceding claims, further comprising transmitting, by the mobile apparatus, at least one of
a confirmation of adjustment of frequency;
a report of failure of an adjustment of frequency;
an indication of an adjusted frequency;
an energy status of a battery of the mobile apparatus; and
an indication of a status of motion of the mobile apparatus.

11. An apparatus configured to perform the method of any of the preceding claims.

12. The apparatus according to claim 11, further comprising at least one of:
a battery;
a sensor;
a temperature sensor;
a light sensor;
a movement sensor;
a time monitor;
a circuitry configured to detect a status of a battery providing a power supply to the mobile apparatus;
a circuitry configured to detect a status of the air interface;
a transceiver; and
a user interface.

13. The apparatus according to claim 11 or 12, wherein the apparatus is one of:
a chip;
an integrated circuit;
a printed circuit board;
a plug-in module;
a tag;
a server of a positioning infrastructure;
a mobile device; and
a stationary device.

14. A system comprising a mobile apparatus and a positioning infrastructure, wherein at least one of the mobile apparatus and a stationary apparatus of the positioning infrastructure is an apparatus according to claim 11.

15. A computer program code configured to cause computing apparatus to perform the actions of the method of any of claims 1 to 9.

## Patentansprüche

1. Verfahren, umfassend:
Überwachen mindestens eines Kriteriums für eine Anpassung einer Frequenz einer periodischen Übertragung von Bluetooth-Niedrigenergie-Datenpaketen durch eine mobile Vorrichtung über eine Luftschnittstelle, wobei die periodische Übertragung von Bluetooth-Niedrigenergie-Datenpaketen eine Bestimmung eines Richtungsvektors zu oder von der mobilen Vorrichtung ermöglicht; und
wenn detektiert wird, dass das mindestens eine Kriterium erfüllt wird, Bewirken einer Anpassung der Frequenz der periodischen Übertragung von Bluetooth-Niedrigenergie-Datenpaketen durch die mobile Vorrichtung,
wobei das mindestens eine Kriterium zu mindestens einem von Folgendem in Beziehung steht:
Umgebungstemperatur an der mobilen Vorrichtung;
ein Ausmaß von Umgebungslicht an der mobilen Vorrichtung;
eine physikalische Kraft, die auf die mobile Vorrichtung ausgeübt wird;
eine gegenwärtige Tageszeit;
ein gegenwärtiges Datum;
eine Qualität empfangener Übertragungen;
ein Ausmaß von mobilen Vorrichtungen, die Informationen übertragen;
ein Ausmaß von Verkehr in der Luftschnittstelle; und
ein Ausmaß detektierter Paketkollisionen in der Luftschnittstelle.

2. Verfahren nach Anspruch 1, wobei das Überwachen mindestens von der mobilen Vorrichtung durchgeführt wird.

3. Verfahren nach Anspruch 2, wobei das Kriterium ferner zu Folgendem in Beziehung steht:
eine Bewegung der mobilen Vorrichtung.

4. Verfahren nach Anspruch 2, wobei das Kriterium ferner zu mindestens einem von Folgendem in Beziehung steht:
Empfang, durch die mobile Vorrichtung, einer Neukonfigurationsnachricht von einer stationären Vorrichtung;
Sensordaten;
eine Position der mobilen Vorrichtung;
verbleibende Batterieenergie, die der mobilen Vorrichtung verfügbar ist.

5. Verfahren nach einem der Ansprüche 2 bis 4, wobei die mobile Vorrichtung das mindestens eine Kriterium nur:
in im Voraus bestimmten Zeitintervallen; oder
eine im Voraus bestimmte Periode nach jeder Übertragung von Informationen
überwacht.

6. Verfahren nach Anspruch 1, wobei das Überwachen mindestens teilweise an einer stationären Vorrichtung durchgeführt wird und wobei Bewirken einer Anpassung der Frequenz umfasst, eine Übertragung einer Neukonfigurationsnachricht an die mobile Vorrichtung durch die stationäre Vorrichtung zu bewirken.

7. Verfahren nach Anspruch 6, wobei das Kriterium, das durch die stationäre Vorrichtung überwacht wird, ferner zu Folgendem in Beziehung steht:
eine Bewegung der mobilen Vorrichtung.

8. Verfahren nach Anspruch 6, wobei das von der stationären Vorrichtung überwachte Kriterium ferner zu mindestens einem von Folgendem in Beziehung steht:
eine Position der mobilen Vorrichtung;
an der stationären Vorrichtung von der mobilen Vorrichtung empfangene Informationen;
ein gegenwärtiger Batteriezustand der mobilen Vorrichtung.

9. Verfahren nach einem der vorstehenden Ansprüche, wobei das Überwachen mindestens an der mobilen Vorrichtung durchgeführt wird und das Kriterium mindestens Empfangen, durch die mobile Vorrichtung, einer Neukonfigurationsnachricht von einer stationären Vorrichtung enthält oder das Überwachen mindestens an einer stationären Vorrichtung durchgeführt wird und Bewirken einer Anpassung der Frequenz umfasst, durch die stationäre Vorrichtung eine Neukonfigurationsnachricht an die mobile Vorrichtung zu übertragen, und wobei die Neukonfigurationsnachricht mindestens eines von Folgendem angibt:
eine gewünschte Frequenz für die periodische Übertragung von Informationen;
ein gewünschter Frequenzbereich für die periodische Übertragung von Informationen;
ein gewünschtes Zeitintervall zwischen periodischen Übertragungen von Informationen;
ein gewünschter Bereich von Zeitintervallen zwischen periodischen Übertragungen von Informationen;
ein gewünschtes Veränderungsausmaß einer Frequenz, die gegenwärtig für eine periodische Übertragung von Informationen verwendet wird;
eine Angabe eines weiteren Kriteriums zum Anpassen der Frequenz der periodischen Übertragung von Informationen;
eine angestrebte Batterienutzungsdauer für die mobile Vorrichtung; und
eine Zeitspanne, während der eine Anpassung der Frequenz anzuwenden ist.

10. Verfahren nach einem der vorstehenden Ansprüche, ferner umfassend Übertragen, durch die mobile Vorrichtung, mindestens eines von Folgendem:
eine Bestätigung der Anpassung der Frequenz;
ein Fehlerbericht einer Anpassung der Frequenz;
eine Angabe einer angepassten Frequenz;
ein Energiezustand einer Batterie der mobilen Vorrichtung; und
eine Angabe eines Bewegungszustands der mobilen Vorrichtung.

11. Vorrichtung, konfiguriert zum Durchführen des Verfahrens nach einem der vorstehenden Ansprüche.

12. Vorrichtung nach Anspruch 11, ferner umfassend mindestens eines von Folgendem:
eine Batterie;
ein Sensor;
ein Temperatursensor;
ein Lichtsensor;
ein Bewegungssensor;
eine Zeitüberwachungsvorrichtung;
eine Schaltung, konfiguriert zum Detektieren eines Zustands einer Batterie, die der mobilen Vorrichtung eine Leistungsversorgung bereitstellt;
eine Schaltung, konfiguriert zum Detektieren eines Zustands der Luftschnittstelle;
ein Sender/Empfänger; und
eine Benutzerschnittstelle.

13. Vorrichtung nach Anspruch 11 oder 12, wobei die Vorrichtung eines von Folgendem ist:
ein Chip;
eine integrierte Schaltung;
eine gedruckte Leiterplatte;
ein Einsteckmodul;
ein Etikett;
ein Server einer Positionierungsinfrastruktur;
eine mobile Vorrichtung; und
eine stationäre Vorrichtung.

14. System, umfassend eine mobile Vorrichtung und eine Positionierungsinfrastruktur, wobei mindestens eine der mobilen Vorrichtung und einer stationären Vorrichtung der Positionierungsinfrastruktur eine Vorrichtung nach Anspruch 11 ist.

15. Computerprogrammcode, konfiguriert zum Bewirken, dass eine Berechnungsvorrichtung die Aktionen des Verfahrens nach einem der Ansprüche 1 bis 9 durchführt.

## Revendications

1. Procédé comprenant :
le contrôle d'au moins un critère pour un réglage d'une fréquence d'une transmission périodique de paquets de données Bluetooth de basse énergie par un appareil mobile par l'intermédiaire d'une interface radio, la transmission périodique de paquets de données Bluetooth de basse énergie permettant une détermination d'un vecteur directionnel vers ou depuis l'appareil mobile ; et
quand il est détecté que l'au moins un critère est satisfait, la mise en oeuvre d'un réglage de la fréquence de transmission périodique de paquets de données Bluetooth de basse énergie par l'appareil mobile,
dans lequel l'au moins un critère porte sur au moins l'une :
d'une température ambiante au niveau de l'appareil mobile ;
d'une quantité de lumière ambiante au niveau de l'appareil mobile ;
d'une force physique appliquée à l'appareil ;
d'une heure actuelle de la journée ;
d'une date actuelle ;
d'une qualité des transmissions reçues ;
d'une quantité d'appareils mobiles qui transmettent des informations ;
d'une quantité de trafic sur l'interface radio ; et
d'une quantité de collisions de paquets détectées sur l'interface radio.

2. Procédé selon la revendication 1, dans lequel le contrôle est exécuté au moins par l'appareil mobile.

3. Procédé selon la revendication 2, dans lequel le critère porte en outre sur :
un mouvement de l'appareil mobile.

4. Procédé selon la revendication 2, dans lequel le critère porte en outre sur au moins l'une :
d'une réception, par l'appareil mobile, d'un message de reconfiguration provenant d'un appareil fixe ;
de données de capteurs ;
d'une position de l'appareil mobile ;
d'une énergie de batterie restante disponible au niveau de l'appareil mobile.

5. Procédé selon l'une quelconque des revendications 2 à 4, dans lequel l'appareil mobile contrôle l'au moins un critère uniquement :
à des intervalles de temps prédéterminé ; ou
pendant une période prédéterminée après chaque transmission d'informations.

6. Procédé selon la revendication 1, dans lequel le contrôle est exécuté au moins en partie au niveau d'un appareil fixe, et dans lequel la mise en oeuvre d'un réglage de la fréquence comprend la mise en oeuvre, par l'appareil fixe, d'une transmission d'un message de reconfiguration à l'appareil mobile.

7. Procédé selon la revendication 6, dans lequel le critère contrôlé par l'appareil fixe porte en outre sur :
un mouvement de l'appareil mobile.

8. Procédé selon la revendication 6, dans lequel le critère contrôlé par l'appareil fixe porte en outre sur au moins l'un :
d'une position de l'appareil mobile ;
d'informations reçues, au niveau de l'appareil fixe, depuis l'appareil mobile ;
d'un état de batterie actuel de l'appareil mobile.

9. Procédé selon l'une quelconque des revendications précédentes, dans lequel le contrôle est exécuté au moins au niveau de l'appareil mobile et le critère comporte au moins la réception, par l'appareil mobile, d'un message de reconfiguration depuis un appareil fixe, ou le contrôle est exécuté au moins au niveau d'un appareil fixe et la mise en oeuvre d'un réglage de la fréquence comprend la transmission, par l'appareil fixe, d'un message de reconfiguration à l'appareil mobile, et dans lequel le message de reconfiguration indique au moins l'un :
d'une fréquence souhaitée pour la transmission périodique d'informations ;
d'une gamme souhaitée de fréquences pour la transmission périodique d'informations ;
d'un intervalle de temps souhaité entre les transmissions périodiques d'informations ;
d'une plage souhaitée d'intervalles de temps entre les transmissions périodiques d'informations ;
d'une quantité souhaitée de changement d'une fréquence actuellement utilisée pour une transmission périodique d'informations ;
d'une indication d'un autre critère de réglage de la fréquence de la transmission périodique d'informations ;
d'une durée de vie de batterie cible de l'appareil mobile ; et
d'un laps de temps durant lequel un réglage de fréquence doit être appliqué.

10. Procédé selon l'une des revendications précédentes, comprenant en outre la transmission, par l'appareil mobile, d'au moins l'un :
d'une confirmation du réglage de fréquence ;
d'un rapport d'échec de réglage de fréquence ;
d'une indication d'une fréquence réglée ;
d'un état d'énergie d'une batterie de l'appareil mobile ; et
d'une indication d'un état de mouvement de l'appareil mobile.

11. Appareil configuré pour exécuter le procédé selon l'une quelconque des revendications précédentes.

12. Appareil selon la revendication 11, comprenant en outre au moins l'un :
d'une batterie ;
d'un capteur ;
d'un capteur de température ;
d'un capteur de lumière ;
d'un capteur de mouvement ;
d'un contrôleur de temps ;
de circuits configurés pour détecter un état d'une batterie fournissant une alimentation électrique à l'appareil mobile ;
de circuits configurés pour détecter un état de l'interface radio ;
d'un émetteur-récepteur ; et
d'une interface utilisateur.

13. Appareil selon la revendication 11 ou 12, l'appareil étant l'un :
d'une puce ;
d'un circuit intégré ;
d'une carte à circuit imprimé ;
d'un module enfichable ;
d'une étiquette électronique ;
d'un serveur d'une infrastructure de positionnement ;
d'un dispositif mobile ; et
d'un dispositif fixe.

14. Système comprenant un appareil mobile et une infrastructure de positionnement, dans lequel au moins l'un de l'appareil mobile et d'un appareil fixe de l'infrastructure de positionnement est un appareil selon la revendication 11.

15. Code de programme informatique configuré pour amener l'appareil informatique à exécuter les actions du procédé selon l'une quelconque des revendications 1 à 9.
